# EUROPÄISCHE PATENTANMELDUNG

(11) **EP 1 857 608 A2**
(43) Veröffentlichungstag der Anmeldung: **21.11.2007**
(21) Anmeldenummer: 07009602.9
(22) Anmeldetag: 14.05.2007
(51) Int. Cl.: E04F 13/08

(54) **Verfahren, Haltedübel und Bohrwerkzeug für die nachträgliche Fixierung von Dämmplatten an einer Gebäudewand**

(30) Priorität: 16.05.2006 DE 102006022696
(71) Anmelder: Flörchinger, Ludwig, 67304 Eisenberg (DE)
(72) Erfinder: Flörchinger, Ludwig, 67304 Eisenberg (DE)
(74) Vertreter: Kesselhut, Wolf

(57) **Zusammenfassung**

Die Erfindung betrifft ein einen Haltedübel zur Fixierung von Dämmplatten an der Außenfläche einer Gebäudewand, der sich durch einen Dübelschaft (11) auszeichnet, der an seinem freien Ende eine Längsschlitzung (12) aufweist, in der ein Spreizteil (13) gehalten ist. Die Erfindung betrifft weiterhin ein Bohrwerkzeug zum Bohren eines Bohrlochs vorgegebener Tiefe, in welches der Haftedübel eingeschlagen werden kann, sowie ein Verfahren zum Einbringen eines solchen Haltedübels.

## Beschreibung

Die Erfindung betrifft ein Verfahren, einen Haltedübel und ein Bohrwerkzeug zur nachträglichen Fixierung von Dämmplatten an der Außenfläche einer Gebäudewand nach den Oberbegriffen der Ansprüche 1, 2 und 8.

Zur Verbesserung des Energiehaushaltes z.B, eines Wohngebäudes, werden an der Außenfläche der Gebäudewand Dämmelemente angeklebt, die mit einer Außenverkleidung, insbesondere mit einem Außenverputz beschichtet werden. In gleicher Weise können zur Verbesserung des ästhetischen Eindruckes auch Klinkerriemchen aufgeklebt werden.

Diese als Vollwärmeschutzfassaden bezeichneten Dämmelemente können sich mit der Zeit aufgrund einer Veränderung des Klebematerials ablösen. Dieses kann möglicherweise nach 25 Jahren der Fall sein

Aufgabe der Erfindung ist es, Mittel bereitzustellen, mit denen die Außenfassade auf einfache Weise erhalten werden kann.

Diese Aufgabe wird erfindungsgemäß durch die Merkmale des Anspruches 1 gelöst.

Erfindungsgemäß also wird zunächst ein Durchgangsloch durch die Dämmplatte mit Oberputz hindurch in die Gebäudewand eingebracht, wobei ein Bereich des Oberputzes um das Durchgangsloch herum ausgefräst wird. Sodann wird ein Haltedübel durch das Durchgangsloch in der Dämmplatte hindurch eingeschlagen, bis der Haltedübel in ein Sackloch in der Gebäudewand eingreift und darin verspannt wird.

Zur Fixierung der Dämmplatten wird erfindungsgemäß ein Haltedübel mit den Merkmalen des Anspruches 2 verwendet. Dieser Haltedübel trägt an seinem freien Ende ein als Spreizkeil ausgebildetes Spreizteil, über den sich das als Rohr ausgebildete freie Ende des Dübelschaftes schiebt und dabei aufgespreizt wird, wodurch eine sichere Halterung des Haltedübels im Mauerwerk erreicht wird.

Dabei befindet sich am Haltedübel erfindungsgemäß eine Abdeckkappe, deren Struktur der Struktur des Oberputzes entspricht. Wenn der Haltedübel seine Endstellung erreicht hat, greift das Spreizteil ins Innere des Dübelschaftes ein und verspannt, bzw. verkeilt diesen in dem Sackloch in der Gebäudewand, indem es das freie Ende des Dübelschaftes aufweitet.

Zur Herstellung des Bohrloches, in das der Haltedübel eingesetzt werden kann, wird bevorzugt ein Bohrwerkzeug gemäß Anspruch 7 verwendet.

An diesem Bohrwerkzeug, das schlagbohrerartig ausgebildet ist, ist ein Fräselement verstellbar befestigt, mit dem ein bestimmter Bereich des Oberputzes um das Bohrwerkzeug herum entfernt werden kann, in den dann die Abdeckkappe hineinpasst, wenn der Haltedübel seine Endstellung erreicht hat. Diese Endstellung kann durch einen Abstandshalter vorgegeben werden, der zur Einstellung der Bohrtiefe bevorzugt dem Bohrwerkzeug zugeordnet, insbesondere an diesem aufgenommen ist.

### Die Anwendung der Erfindung geschieht auf folgende Weise:

Wenn festgestellt wird, dass sich die Klebung bei einer oder mehreren der Dämmplatten nach einer bestimmten Zeit (z.B. nach 25 Jahren) verschlechtert hat, wird mittels des Bohrwerkzeuges das Bohrloch durch die Dämmplatte hindurch in das Mauerwerk gebohrt. Mittels des Fräselementes wird der Oberputz in einem bestimmten Bereich um das Bohrloch mit entfernt, wobei das Fräselement lediglich den Oberputz abfräst. Die Eindringtiefe des Bohrloches wird entsprechend der Dicke der Dämmplatte und des Oberputzes mittels eines Anschlages festgelegt, der an der Bohrmaschine oder ggfls. am Bohrwerkzeug feststellbar angebracht ist. Nach Fertigstellung des Bohrloches und Herausnahme des Bohrwerkzeuges wird der Haltedübel mit dem Spreizkeil und der in der Struktur dem Oberputz entsprechenden Abdeckkappe in das Bohrloch eingefügt, bis der Spreizkeil gegen den Grund des Bohrloches im Mauerwerk zum Anliegen kommt. Sodann wird der aus der Dämmplatte herausragende Teil in das Bohrloch eingeschlagen, bis sich die Abdeckkappe gegen die Dämmplatte anlegt. Anschließend werden die Außenseite der Dämmplatte und die bevorzugt auch mit derselben Struktur versehene Oberseite der Abdeckkappe überstrichen, wodurch sich für den Betrachter eine einheitliche Fassadenfläche ergibt.

Pro Quadratmeter Dämmmaterial werden zweckmäßigerweise bis zu sechs Haltedübel verwendet.

Weitere Ausgestaltungen der Erfindung sind den weiteren Unteransprüchen zu entnehmen.

An Hand der Zeichnung, in der ein Ausführungsbeispiel der Erfindung dargestellt ist, sollen weitere vorteilhafte Ausgestaltungen und Verbesserungen sowie weitere Vorteile näher erläutert und beschrieben werden.

Es zeigen:
- Fig. 1: eine schematische Darstellung eines Haltedübels,
- Fig. 2: eine schematische Darstellung eines Bohrwerkzeuges und
- Fig. 3 und 4: je eine schematische Darstellung des Einsetzens des Haltedübels in einer Zwischen- und in der Endstellung.

Ein Haltedübel 10 umfasst einen als Rohr ausgebildeten Dübelschaft 11, der an seinem einen, freien Ende eine axiale Schlitzung 12 aufweist, die entweder an einer Mantellinie oder an zwei distalen Mantellinien vorgesehen ist. Die Schlitzung 12 an zwei Mantellinien ist einfacher herzustellen, weil ein einfaches Einsägen des Endes des Dübelschaftes 12 vorgenommen werden kann. In das freie Ende des Dübelschaftes 12 ist ein als Spreizkeil ausgebildetes Spreizteil 13 teilweise eingeschoben, welches in dem Dübelschaft 12 durch Reib- und/oder Formschluß gehalten ist. Das Spreizteil 13 verjüngt sind zu dem Ende hin, das in den Dübelschaft 12 eingesteckt ist. Hierzu weist das aus dem Dübelschaft 12 herausragende Ende 13a einen größeren Durchmesser auf, als das sich innerhalb des Dübelschaftes 12 befindliche Ende 13b.

Im Bereich des anderen Endes des Dübelschaftes 12 ist eine Abdeckkappe 14 befestigt, deren Funktion und Struktur sowie deren Abstand vom geschlitzten Ende des Dübelschaftes 12 weiter unten erläutert werden soll.

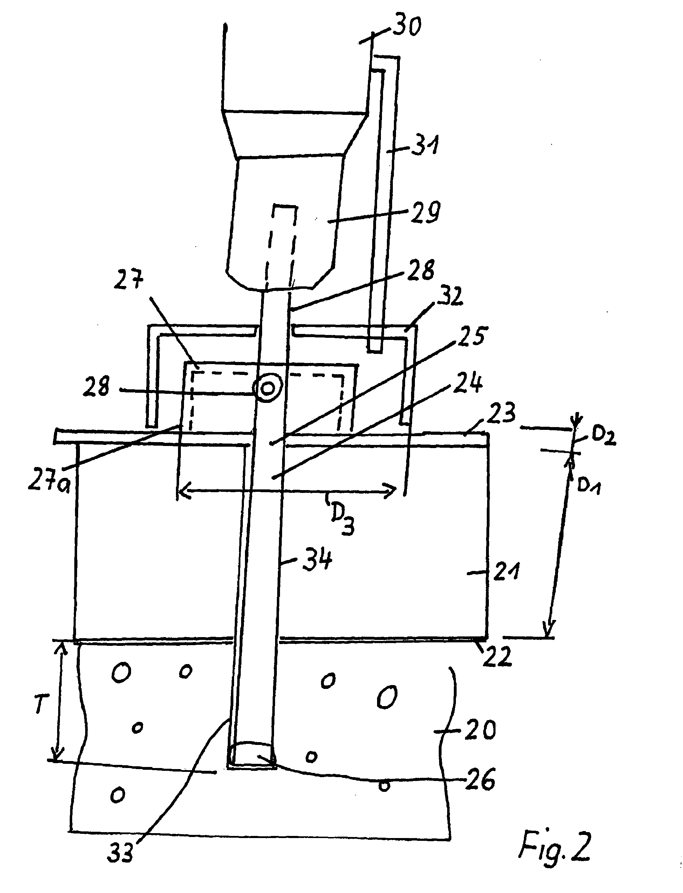

Es sei nun auf die Fig. 2 verwiesen.

Auf einer im horizontalen Querschnitt gezeigten Gebäudewand 20 sind Dämmplatten 21 aus einem Dämmstoff aufgebracht, normalerweise aufgeklebt. Hierzu befindet sind auf der Außenfläche der Hauswand 20 eine Klebeschicht 22, die als Haftvermittler für die Dämmplatte 21 dient. Auf der freien Außenfläche der Dämmplatte 21 ist ein Außen- oder Oberputz 23 aus einem Verputzmaterial aufgebracht. Die Dämmplatte 21 weist hierbei eine Dicke D1, und der Oberputz 23 eine Dicke D2.

Zum Einbringen des Haltedübels 10 in die Gebäudewand 20 mit der Dämmplatte 21 ist ein Bohrwerkzeug 24 vorgesehen, das einen langgestreckten Schaft 25 aufweist, an dessen freiem Ende ein Bohrelement oder Bohrkopf 26 befestigt ist, wie es z.B. auch an üblichen Schlagbohrern angebracht verwendet wird. In entsprechender Weise ist der übrige Schaft 25 wie ein Schlagbohrer ausgebildet. Dieser Schaft trägt im Bereich seines anderen Endes ein Fräselement 27, dessen Außendurchmesser D3 in gewissem Umfang beliebig gewählt werden kann. Dieses Fräselement 27 ist am Schaft 25 mittels einer Feststellschraube 28 festlegbar. Mit dem über das Fräselement 27 hinausragenden Bereich 28 kann der Schaft 25 oder das Bohrwerkzeug 24 in das Bohrfutter 29 einer Handbohrmaschine 30 eingespannt werden.

An dieser Handbohrmaschine 30 ist über eine Führung 31 ein bevorzugt becherförmiger Abstandshalter 32 fixierbar.

Die Länge des Bohrwerkzeuges 24 ist abhängig von der Dicke der Dämmplatte 21, der Dicke D2 des Oberputzes 23 und der Tiefe T eines in das Mauerwerk 20 einzubringenden Sackloches 33. Das Bohrwerkzeug könnte in der Länge genormt sein; es ist wenigstens so zu bemessen, dass es durch handelsübliche Dämmplatten in eine gewünschte Tiefe T ins Mauerwerk 20 eingebohrt werden kann. Diese Tiefe kann dann bevorzugt mit der korrekten Einstellung des Abstandshalters 32 verändert werden.

### Das Bohrwerkzeug 24 wird wie folgt eingesetzt:

Nach Einstellung der Lage des Abstandshalters 32 wird das Bohrwerkzeug 24 durch die Dämmplatte 21 unter Bildung eines Durchgangsloches 34 hindurchgebohrt, bis es auf das Mauerwerk 20 trifft. Dann wirkt das Bohrwerkzeug 24 als Schlagbohrer und wird bis in die Tiefe T des Mauerwerkes 20 oder der Gebäudewand 20 in dieses bzw. diese hineingetrieben. Wenn nun das Fräswerkzeug 27 mit seiner durchgehenden, insbesondere gezahnten Frässeite 27a auf den Oberputz 23 auftrifft, erfolgt der weitere Vortrieb des Bohrwerkzeuges 24 aufgrund der Einstellung des Abstandshalters 32 solange, bis das Fräselement 27 den Oberputz 23 in einem Bereich um den Schaft 25 herum vollständig flächig abgefräst hat.

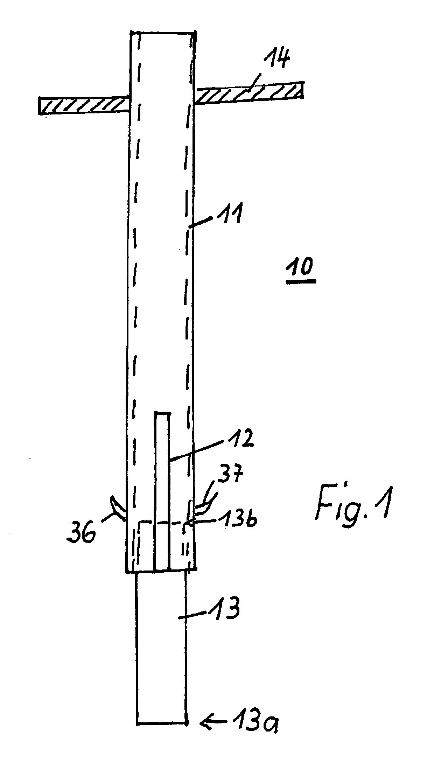

Damit ist der Bohrvorgang, d.h. die Vorbereitung, um den Haltedübel 10 der Fig. 1 einsetzen zu können, abgeschlossen.

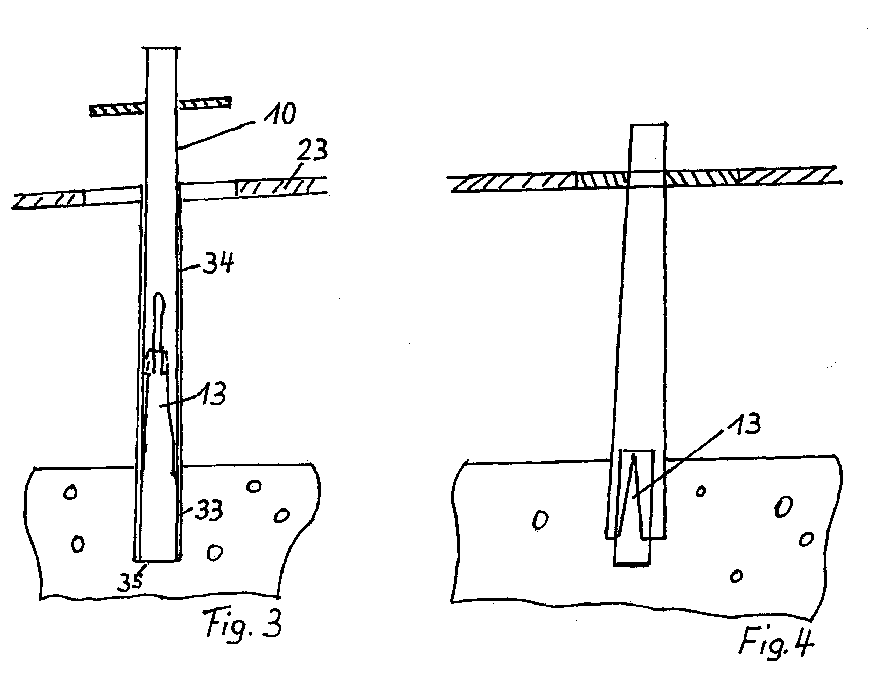

Aus der Fig. 3 geht hervor, dass durch das Fräselement 27 ein Bereich 23 a aus dem Oberputz 23 herausgefräst worden ist. Nun wird der Haltedübel 10 mit dem geschlitzten Ende in das Durchgangsloch 34 soweit eingesetzt, bis das Spreizteil 13 in den Bereich des Mauerwerkes 20 gelangt. Das weitere Eintreiben des Haltedübels 10 erfolgt mittels eines Werkzeuges, z.B. mittels eines Hammers, bis die in der Fig. 4 dargestellte Endstellung erreicht ist, Dabei hat sich das Spreizteil mit dem Ende mit größerem Durchmesser auf den Grund 35 des Sackloches 33 aufgesetzt, und der Dübelschaft 11 wird durch ein weiteres Eintreiben mit dem geschlitzten Ende über das Spreizteil 13 geschlagen, wodurch sich der Dübelschaft 11 aufweitet und gegen die Innenfläche des Sackloches 33 anpresst. Zusätzlich können, wie in Fig. 1 dargestellt, am Dübelschaft wenigstens in dem Bereich, mit dem dieser in das Sackloch 33 eingreift, Widerhaken 36, 37 angeordnet sein.

Obgleich der Haltedübel 10 bevorzugt als Kunststoffspritzteil mit dran bereits im Spritzgussverfahren angespritzter Abdeckplatte ausgebildet ist, kann dieser auch aus Vollmaterial gefertigt sein, das im geschlitzten Bereich ausgebohrt ist.

Das Spreizteil 13, das im Kaufzustand bevorzugt schon in den Dübelschaft 11 eingesetzt und in diesem form- und/oder reibschlüssig gehalten wird, ist bevorzugt aus Metall gefertigt, kann jedoch gewünschten Falls auch aus Kunststoff bestehen.

In gleicher Weise ist es denkbar, dass das Spreizteil 13 auch mittels wenigstens eines Steges oder eines Filmscharniers bereits bei der Fertigung am Dübelschaft 11 angeformt wird, wobei der Steg bzw. das Filmscharnier beim Eintreiben des Haltedübels 10 abreißt und ein Aufspreizen des Dübelschafts 11 ermöglicht.

Bei einer besonderen Ausführungsform der Erfindung kann die Dicke des Oberputzes 23, beispielsweise 3 - 4 mm betragen. Als Bohrlochdurchmesser kann ein Maß von z.B. 10 mm gewählt werden. Das Spreizteil 13 kann z.B. für den Versand 5 mm tief in den Dübelschaft eingefügt sein, wobei das Spreizteil an einem Ende einen Durchmesser von 7mm und am anderen Ende einen solchen von 8 mm aufweist. Eine derartige Dübelanordnung kann einen Festigkeitszug von bis zu 10 kg pro Stück aufnehmen. Pro Quadratmeter Dämmmaterial könnten sechs Haltedübel verwendet werden.

## Patentansprüche

1. Verfahren zur nachträglichen Fixierung von auf einer Außenfläche einer Gebäudewand (20) eines Gebäudes aufgebrachten Dämmplatten (21) mittels wenigstens eines Haltedübels (10), wobei sich auf der Außenfläche der Dämmplatten (21) eine Schicht aus Verputzmaterial als Oberputz (23) befindet,
**gekennzeichnet durch** folgende Verfahrensschritte:
Bohren eines Durchgangsloches (34) **durch** den Oberputz und die Dämmplatte (21) und eines Sackloches (33) in der Gebäudewand (20) bis in eine Tiefe (T),
Abfräsen eines Bereiches um das Durchgangsloch (34) des Oberputzes (23) mittels eines Fräselementes (27),
Einschlagen eines Haltedübels (10) **durch** das Durchgangsloch (34) in das Sackloch (33), wobei sich ein mit dem Haltedübel verbundenes Spreizteil (13) ins innere des Haltedübels (10) eindrückt und diesen aufspreizt.

2. Haltedübel zur Fixierung von Dämmplatten an der Außenfläche einer Gebäudewand zur Durchführung des Verfahrens nach Anspruch 1, mit einem Dübelschaft,
**dadurch gekennzeichnet, dass**
der Dübelschaft (11) an seinem freien Ende eine Längsschlitzung (12) aufweist, in der ein Spreizteil (13) gehalten ist.

3. Haltedübel nach Anspruch 2,
**dadurch gekennzeichnet, dass**
am Dübelschaft (11) eine Abdeckkappe (14) befestigt ist, deren Struktur der Struktur des Oberputzes (23) angepasst ist, und die nach Verbringen des Haltedübels (10) in seine Endstellung in einem ausgefästen, der Größe der Abdeckkappe (14) angepassten Bereich des Oberputzes (23) aufgenommen ist.

4. Haltedübel nach Anspruch 2 oder 3,
**dadurch gekennzeichnet, dass**
das Spreizteil (13) eine konische Form oder eine Keilform aufweist, deren Ende mit kleinerem Durchmesser in den Dübelschaft (11) eingreift.

5. Haltedübel nach Anspruch 4,
**dadurch gekennzeichnet, dass**
das Spreizteil (13) form- und/oder reibschlüssig im Dübelschaft (11) gehalten wird.

6. Haltedübel nach Anspruch 4,
**dadurch gekennzeichnet, dass**
das Spreizteil (13) mittels eines abbrechbaren Verbindungssteges mit dem Dübelschaft (11) verbunden ist.

7. Bohrwerkzeug zur Durchführung des Verfahrens nach Anspruch 1 zum Vorbereiten des Einsetzens des Haltedübels nach einem der Ansprüche 2 bis 5,
**dadurch gekennzeichnet, dass**
dieses einen schlagbohrerähnlichen Bohrschaft (25) umfasst, an dem ein Fräselement (27) zum Ausfräsen eines Bereiches des Oberputzes (23) verstellbar aufgenommen ist, wobei das Bohrwerkzeug (24) in das Bohrfutter (29) einer Handbohrmaschine einsetzbar ist.

8. Bohrwerkzeug nach Anspruch 7,
**dadurch gekennzeichnet, dass**
dem Bohrwerkzeug ein Anschlag (32) zugeordnet ist, über den die Einbohrtiefe des Bohrwerkzeuges (24) einstellbar ist.
